(19) Europäisches Patentamt

European Patent Office

Office européen des brevets

(11) EP 1 389 861 A1

(12) **EUROPEAN PATENT APPLICATION**

(43) Date of publication:
**18.02.2004 Bulletin 2004/08**

(51) Int Cl.[7]: **H04L 27/26**, H04L 25/02, H04L 5/02

(21) Application number: **02018018.8**

(22) Date of filing: **12.08.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **SIEMENS AKTIENGESELLSCHAFT**
**80333 München (DE)**

(72) Inventors:
- **Bolinth, Edgar**
  **41189 Mönchengladbach (DE)**
- **Grünheid, Rainer, Dr.**
  **21073 Hamburg (DE)**
- **Kern, Ralf**
  **4639 Bocholt (DE)**
- **Niemeyer, Ulf**
  **44803 Bochum (DE)**
- **Ran, Jianjun**
  **21073 Hamburg (DE)**
- **Rohling, Hermann, Prof.**
  **38304 Wolfenbüttel (DE)**

(54) **Channel tracking using decision directed estimation in pilot-assisted wireless multi-carrier systems**

(57)    Method, transmitter and receiver for supporting communication over a communication channel, combining pilot and decision directed estimation information.

The number of pilots can thus be reduced below the threshold established by the sampling theorem, since the decision directed estimation tracks the evolution of the parameters estimated.

Figure 3-1: Principle of decision directed channel tracking

EP 1 389 861 A1

**Description**

FIELD AND BACKGROUND OF THE INVENTION

The recently developed wireless LAN systems, HIPERLAN/2 and IEEE 802.11a, operate in the 5GHz frequency range and have originally been designed for stationary terminals in slowly time-varying environments. Hence, pilot symbols for channel estimation are only provided at the beginning of a burst (in the preamble), since the channel behaviour is assumed not to change significantly over the burst duration. In order to support new scenarios with higher terminal mobility, it is essential to track the changes of the channel transfer function over time. In this paper, the focus is directed to techniques for a robust channel estimation, mainly based on enhanced pilots (EP). In more detail three different channel tracking schemes are developed and applied to the HIPERLAN/2 and the IEEE 802.11a system, namely 1) use of scattered pilots, 2) use of midambles, and 3) an additional decision-directed technique, combined with the midamble concept. The performance of the different methods is studied and compared quantitatively. As a result, suitable channel tracking techniques for the different terminal speeds and data rates are proposed.

BRIEF DESCRIPTION OF THE PRESENT STATE OF THE ART

In the following a more detailed description of the state of the art more precisely to channel estimation in wireless LANs for mobile environments is given:

**I. INTRODUCTION**

Recently, the increasing importance of wireless LAN systems providing high data rates has been reflected in the development of the HIPERLAN/2 (High PERformance Local Area Network) and IEEE 802.11a standards. Both systems are very similar with respect to the physical layer characteristics, e.g. they both make use of the OFDM (Orthogonal Frequency Division Multiplexing) transmission technique and coherent modulation schemes.

As a consequence of the slowly time-variant target environment of WLAN (Wireless Local Area Network) systems, pilot structures for channel estimation are exclusively provided at the beginning of a transmission burst (in the form of a preamble), thus a channel measurement can only be performed once per burst. The measured channel transfer function is applied for equalisation in all parts of the remaining burst.

When it comes to the support of new scenarios which include a higher terminal mobility, the assumption of negligible time variance of the channel is no longer justified. The measurements of the channel transfer function will no longer be valid for the complete burst. Consequently, techniques of tracking the radio channel behaviour over the burst duration will have to be developed.

In this paper, different concepts for channel tracking in a HIPERLAN/2 / IEEE 802.11a system targeted at higher terminal speeds are introduced and their performance is compared quantitatively. The considered techniques include 1) the use of scattered pilots, 2) a midamble-based approach, and 3) a decision-directed technique, combined with the midamble concept. Besides the resulting packet error rate (PER) performance, the introduced amount of pilot overhead necessary at different terminal velocities (50 and 100 km/h) is compared.

**II. ANALYSED PILOT STRUCTURES AND TRACKING CONCEPTS**

As mentioned above, three different concepts for tracking the channel behaviour are investigated in this paper. They are described in more detail in the following sections.

A. *Use of Scattered Pilots*

A pilot distribution which is commonly used in OFDM systems (e.g. in the DVB-T system [1]) are the so-called *scattered pilot patterns.* In this case, the pilot symbols are spread among the OFDM blocks carrying the payload information.

When new scattered pilots are introduced to HIPERLAN/2, the specific parameters of the system and also the radio channel characteristics have to be taken into account.

In the HIPERLAN/2 PHY standard [2], four subcarriers are defined which are continuously modulated by pilot symbols. The subcarrier numbers are given as -21, -7, 7, and 21. These pilots are intended for phase tracking. A channel estimation making use of these pilots, however, is not possible according to the following short consideration.

The pilot distance in time $(N_t T_s)$ and in frequency $(N_f \Delta f)$ has to be sufficiently small in order to be able to perform an interpolation in the receiver. For the considered HIPERLAN/2 and IEEE 802.11a systems, the parameter $T_s = 4\mu s$ denotes the OFDM block duration and $\Delta f = 312{,}5 kHz$ the OFDM subcarrier spacing. The sampling theorem states that the maximum pilot spacing in frequency direction equals

$$N_{f,\max} = \left\lfloor \frac{1}{n \cdot \tau_{\max} \Delta f} \right\rfloor = \left\lfloor \frac{4}{n} \right\rfloor \qquad (1)$$

while for the maximum pilot distance in time direction

$$N_{t,\max} = \left\lfloor \frac{1}{2 \cdot n \cdot f_{D,\max} \cdot T_s} \right\rfloor = \left\lfloor \frac{490,9}{n} \right\rfloor \qquad (2)$$

must be fulfilled. Here, n is the oversampling factor. The numerical values refer to a radio channel with a maximum delay of $\tau_{\max}$ = 800 ns and a Doppler frequency corresponding to $v$ = 50 km/h. Thus it can easily be seen that the pilot spacing of $N_f$=14 provided by the HIPERLAN/2 standard is not sufficient for a channel estimation. Hence, modifications to the existing pattern need to be analysed.

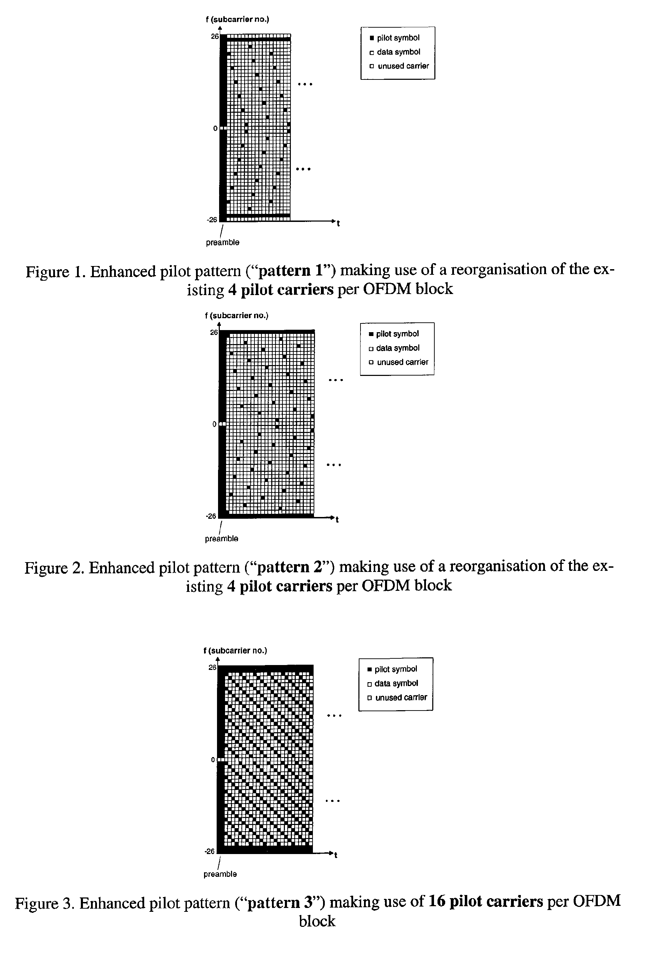

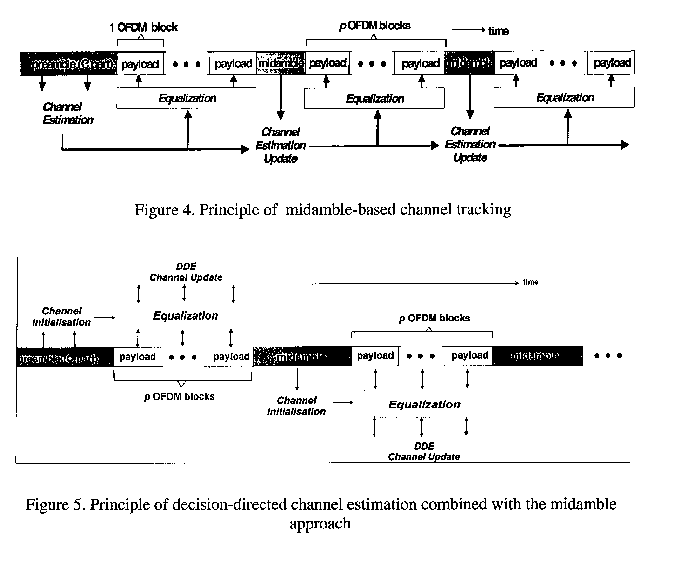

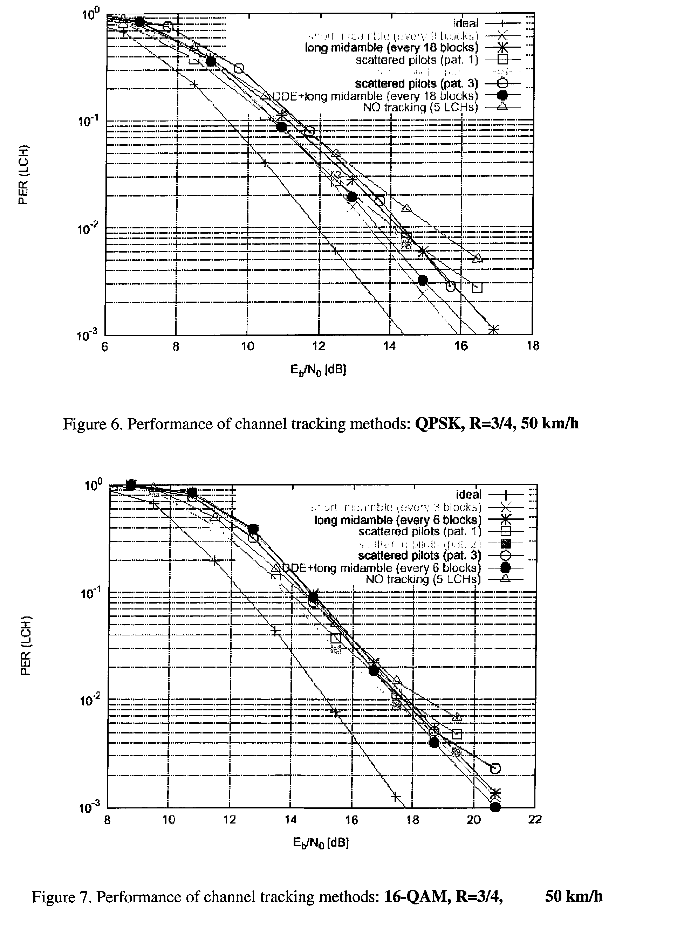

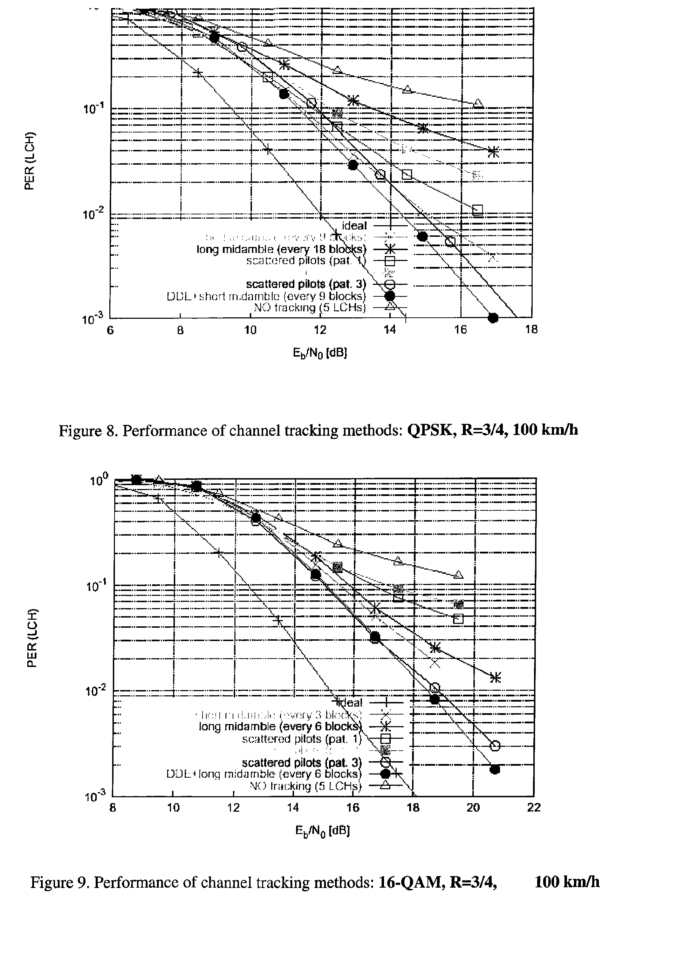

Here, two cases are distinguished. First, two new patterns (labelled "pattern 1" and "pattern 2" in the following) are introduced which make use of a re-organisation of the four pilot symbols that already exist according to the considered standards. Secondly, *additional* pilots are inserted for an improved channel estimation ("pattern 3"). The three enhanced pilot (EP) patterns are depicted in Fig. 1, Fig. 2, and Fig. 3, respectively. The main parameters (pilot distance in time $N_t$ and effective pilot distance $N_{f,\mathrm{eff}}$ in frequency, achieved after interpolation in time direction) are listed in Table I.

TABLE I.

| PARAMETERS OF THE ANALYSED EP PATTERNS | | |
|---|---|---|
| Pilot pattern no. | Number of pilot symbols per OFDM block | Pilot spacing |
| 1 | 2 (periodically scattered) 4 (in total) | $N_{f,eff}$ = 2 $N_t$ = 12 |
| 2 | 2 (periodically scattered) 4 (in total) | $N_{f,eff}$ = 1 $N_t$ = 25 |
| 3 | 12 (periodically scattered) 16 (in total) | $N_{f,eff}$ = 1 $N_t$ = 4 |

Figure 1. Enhanced pilot pattern ("**pattern 1**") making use of a reorganisation of the existing **4 pilot carriers** per OFDM block

Figure 2. Enhanced pilot pattern ("**pattern 2**") making use of a reorganisation of the existing **4 pilot carriers** per OFDM block

Figure 3. Enhanced pilot pattern ("**pattern 3**") making use of **16 pilot carriers** per OFDM block

The position of the pilots $\{f_{scat} \, \Delta f, \, t_{scat} \, T_s\}$ in the time frequency domain can be computed as summarized in Table II.

TABLE II. CLOSED FORM REPRESENTATION OF EP 1 AND 2

| | Closed form representation of EP pattern 1 and 2 |
|---|---|
| i | Step i): $f_{(m)} = (N_{t^*} \ N_{f,eff} + 1) - N_{f,eff}^* \text{ceil}(m/\text{saw}_{\text{thooth-length}}) - \text{rem}(m-1, \text{saw}_{\text{thooth-length}}) * \text{floor}(N_{subc}/\text{saw}_{\text{thooth-length}});$ |

| | |
|---|---|
| | with: $m = 1, .., N_t$; $N_t$ and $N_{f,eff}$ according to Table I; $\quad\text{saw}_{\text{thooth-length}} =$ floor$(\text{sqrt}(N_t)) * N_{f,eff}$ and $N_{subc} = 25$; |
| i i | **Step ii):** $\mathbf{f}_{scat} = $ Permutation $(f_{(m)}) = \underline{P} * \mathbf{f}$ <br> $\mathbf{t}_{scat} = 1, .., N_t$ <br> with vector: $\quad \mathbf{f} = (f_{(1)}, ..., f_{(Nt)})$ and <br> sub-matrices: $\quad \mathbf{a} = $ diag(ones(saw$_{\text{thooth-length}}$, 1)) and $\quad\quad \mathbf{b} = $ zeros(saw$_{\text{thooth-length}}$, saw$_{\text{thooth-length}}$) |
| | $\underline{P}_{pattern2} = [\mathbf{a}\ \mathbf{b}\ \mathbf{b}\quad \underline{P}_{pattern1} = [\mathbf{b}$ <br> $\quad\quad \mathbf{b}\ \mathbf{b};\quad\quad\quad\quad \mathbf{a};$ <br> $\quad\quad \mathbf{b}\ \mathbf{b}\ \mathbf{a}\ \mathbf{b}\ \mathbf{b};\quad\quad\quad \mathbf{a}\ \mathbf{b}];$ <br> $\quad\quad \mathbf{b}\ \mathbf{b}\ \mathbf{b}\ \mathbf{b}\ \mathbf{a};$ <br> $\quad\quad \mathbf{b}\ \mathbf{a}\ \mathbf{b}\ \mathbf{b}\ \mathbf{b};$ <br> $\quad\quad \mathbf{b}\ \mathbf{b}\ \mathbf{b}\ \mathbf{a}\ \mathbf{b}];$ <br> with size$[\underline{P}] = [N_t \times N_t]$ and size$[\mathbf{a}] = $ size$[\mathbf{b}] = [$saw$_{\text{thooth-length}} \times$ saw$_{\text{thooth-length}}];$ |
| | **Closed form representation of EP pattern 3** |

| | |
|---|---|
| i | **Step i):**<br><br>$\mathbf{f_{scat}} = (N_t * \mathrm{saw_{thooth\text{-}length}} + 1) -$<br>$N_{f,eff} * \mathtt{ceil}(m/\mathrm{saw_{thooth\text{-}length}})$<br><br>$\qquad\qquad - \mathtt{rem}(m-1, \mathrm{saw_{thooth\text{-}length}}) * \mathtt{floor}(N_{subc}/\mathrm{saw_{thooth\text{-}length}});$<br><br>$\mathbf{t_{scat}} = \mathtt{rem}((\mathtt{floor}((m-1)/\mathrm{saw_{thooth\text{-}length}}) + N_t), N_t) + 1;$<br><br>$\mathtt{with:}\ m = 1,..,N_{t*}\,\mathrm{saw_{thooth\text{-}length}};$<br>$\qquad\qquad N_t\ \mathrm{and}\ N_{f,eff}\ \mathrm{according\ to\ Table\ I;}$<br>$\qquad\qquad \mathrm{saw_{thooth\text{-}length}} = \mathtt{floor}(N_{subc}/N_t) * N_{f,eff}\ \mathrm{and}\ N_{subc} = 25;$ |

Moreover it can also be seen in Table II that for the EP patterns 1 and 2, where the available continuous pilots are redistributed in the time-frequency domain, two steps are required: a first step i) where the pilots are *'smoothly'* distributed over time and a second step ii) which distributes the pilots more *'smoothly'* also in the frequency domain. It should be mentioned that for the EP pattern 3, where additional pilots are introduced, a *'smooth'* distribution of pilots in time and frequency domain is achievable in one single step.

### B. *Use of Midambles*

In Fig. 4, the *midamble-based* approach is depicted, which simply re-uses the C-part of the preamble specified in H/2 and the IEEE 802.11a by multiplexing the C-part periodically into the user data stream. Different lengths of the midamble are considered. A *long* midamble has a length of 2 OFDM blocks (8µs) and is identical to the C-part of the preamble, whereas *a short* midamble is of length 1 OFDM block (4µs). By investigating both structures, the trade-off between noise reduction and update rate of the channel estimate can be studied at a fixed given overhead. In the receiver, a recursive update of the channel transfer factors is applied. The update period p, i.e. the number of OFDM blocks between two midambles is varied in the analysis. The updated channel estimates are applied unchanged for equalisation of all OFDM blocks until a new midamble is received, as shown in Fig. 4.

Figure 4. Principle of midamble-based channel tracking

### C. *Use of Decision Directed Estimation (DDE)*

Finally, a decision-directed approach is taken into account, where the hard/soft decisions of the demodulator are exploited and fed back to the channel estimation unit after each OFDM block. This method is used as a supplementary technique to the midamble approach. Between two midambles, the channel is tracked recursively with the help of this hard/soft feedback. When a new midamble is received, the channel estimation is re-initialised. The basic principle of DDE is visualised in Fig. 5, whereas the basic recursive channel tracking procedure is summarized in Table III.

Figure 5. Principle of decision-directed channel estimation combined with the midamble approach

## III. QUANTITATIVE ANALYSIS

### A. *Simulation Parameters*

To assess the performance of the described concepts, simulations have been performed, where a channel model "wide open space" (ETSI channel C) has been taken into account. The resulting packet error rate (PER) for different burst lengths, PHY modes (combination of modulation scheme and code rate R), and terminal velocities (50 and 100 km/h) have been analysed. The main parameters are listed in Table III.

### B. *Performance Results*

For the quantitative analysis, 4 or 5 LCH packets (with 1 LCH conveying 432 bit) are transmitted in one burst. Selected results in terms of LCH-PERs are presented in the next Figures (Fig. 6 to Fig. 9). It is important to point out that only the last LCH of the PHY burst has been used for packet error evaluation, hence representing worst case considerations with respect of the changing channel transfer function over time. Furthermore, both the midamble and the DDE-based channel tracking method is designed as a first order IIR filter to minimize memory consumption for already received OFDM blocks. The corresponding PHY modes and terminal speeds (see also Table III) are denoted in the description of each Figure. In order to take into account the different amount of redundancy associated with the considered methods, the curves have been plotted vs. the $E_b/N_0$.

It can be observed that suitable techniques can be found to track the channel variations, which means that the degradation of the PER compared to an ideal channel estimation can be kept moderate. Clearly, the appropriate technique is to be chosen depending on the physical mode and the expected terminal speed.

To sum up the results, Table IV enlists the techniques which have been found to be the most suitable for the corresponding parameters.

Table III.

| Main simulation parameters | |
|---|---|
| General parameters | |
| Channel model | ETSI model C "large open space" |
| OFDM parameters | According to H/2 PHY layer |

Table III.   (continued)

| Main simulation parameters | |
|---|---|
| General parameters | |
| Analysed PHY modes | BPSK, $R = ½$<br>QPSK, $R = ¾$<br>16-QAM, $R = ¾$ |
| Burst length | 4 / 5 LCH packets |
| Terminal velocity | $v = 50$ km/h and 100 km/h |
| Interpolation method in frequency direction (for pre/ midambles, scattered pilots) | Wiener filtering, 5 coefficients |
| Scattered pilots | |
| Interpolation method in time | Constant tracking |
| Pilot patterns | no. 1,2,3 |
| Midambles | |
| Midamble duration | 8 µs ("long") and 4 µs ("short") |
| Update strategy of the channel transfer function | IIR filter of first order, update factor |
| Update period $p$ | Variable (3...18) |
| Decision directed | estimation (+midambles) |
| Type of feedback | "Hard" symbols,<br>with reliability information used to calculate a (**time-variant**) update factor |
| Update strategy of the channel | Symbol by symbol via an<br>IIR filter of first order, |
| transfer function | Initialisation after midamble |

Table IV.

| Suitable Channel Tracking Techniques | | |
|---|---|---|
| | $V = 50$ km/h | $v = 100$ km/h |
| BPSK, R = ½<br><br>4 LCHs per burst | - Scattered pilots<br>- Midambles | - Midambles<br>- Scattered pilots |
| QPSK, R = ¾<br><br>5 LCHs per burst | - Midambles<br>- Scattered pilots | - Midambles<br>- Midambles+DDE |
| 16-QAM, R = ¾<br><br>5 LCHs per burst | - Scattered pilots<br>- Midambles | - Midambles+DDE |

In many cases, midambles provide a good means to update the channel estimation, while at the same time the introduced redundancy is moderate. The use of scattered pilots also shows a good performance which is often comparable to the midamble concept. It should be noted that this good performance is achieved without adding redundancy in the case of pilot patterns 1 and 2, only the positions of the pilots are reorganized. For the combinations of $v = 100$ km/h and QPSK / 16-QAM, the supplementary technique of decision directed estimation (DDE) is advantageous or even required to obtain a satisfactory performance. The SNR loss for the PHY mode of QPSK, R=3/4 and $v$ = 100 km/h is reduced to 2.3 dB (PER of $10^{-2}$, see Fig. 8), by applying the combined approach of midambles and DDE.

Figure 6. Performance of channel tracking methods: **QPSK, R=3/4, 50 km/h**

Figure 7. Performance of channel tracking methods: **16-QAM, R=3/4,      50 km/h**

Figure 8. Performance of channel tracking methods: **QPSK, R=3/4, 100 km/h**

Figure 9. Performance of channel tracking methods: **16-QAM, R=3/4, 100 km/h**

## IV. SIGNALING PROCEDURE FOR EP PATTERNS IN H/2

Throughout this section a simple concept shall be introduced, which describes how the new pilot schemes can be accessed from a higher layer i.e. MAC layer perspective in terms of an extended PHY mode i.e. as new nominal data rates, following the approach in Table V. The signaling concept presented below is tailored to the HIPERLAN/2 specification, but it should be mentioned, that the basic concept may also be applied to an IEEE802.11a system.

Table V.

| Extended PHY modes utilizing new pilot patterns | | | |
|---|---|---|---|
| | **PHY mode identifier** | | |
| **PHY mode i.e. nominal data rate** | **FCH FCH** | **SCH, SCH, RCH** | **LCH** |
| **6 Mbps** (BPSK, r=1/2, r Pilot=1) | 00 | 000 | 0000 |
| **5,25 Mbps** (BPSK, r=1/2, r pilot=7/8) | 01 | 100 | 1000 |
| **9 Mbps** (BPSK, r=3/4, r $_{pilot}$=1) | | | 0001 |
| **7,875 Mbps** (BPSK, r=3/4, r pilot=7/8) | | | 1001 |
| **12 Mbps** (QPSK, r=1/2, r pilot=1) | | 001 | 0100 |
| **10,5 Mbps** (QPSK, r=1/2, r pilot=7/8) | | 101 | 1100 |
| **18 Mbps** (QPSK, r=3/4, r pilot=1) | | 011 | 0011 |
| **15,75 Mbps** (QPSK, r=3/4, r $_{pilot}$=7/8) | | 111 | 1011 |
| **27 Mbps** (16QAM, r=9/16, r pilot=1) | | | 0010 |
| **23,625 Mbps** (16QAM, r=9/16, r pilot=7/8) | | | 1010 |
| **36 Mbps** (16QAM, r=3/4, r Pilot=1 ) | | | 0101 |
| **31,5 Mbps** (16QAM, r=3/4, r $_{pilot}$=7/8) | | | 1101 |
| **54 Mbps** (64QAM, r=3/4, r Pilot=1 ) | | | 0111 |
| **47,25 Mbps** (64QAM, r=3/4, r pilot=7/8) | | | **1111** |

In HIPERLAN/2 the basic MAC frame consists of a sequence of transport channels as follows: broadcast channel (BCH), frame channel (FCH), access feedback channel (ACH), short transport channels (SCH), long transport channels (LCH) and the random access channel (RCH). For sectorized cells, the same sequel of transport channels is transmitted per sector, whereas in each cell all sectors are separated via time division duplex (TDD) and hence, without loss of generality, the same considerations as for a single-sector cell apply.

In Table V two different pilots schemes are introduced: i) short midambles with midamble period p=7 i.e with $r_{pilot}$=7/8, and ii) scattered pilots according to Fig 2. (i.e. pattern 2), leading to $r_{Pilot}$=1. These pilot schemes are defined as new PHY modes i.e. nominal data rates, and can be addressed by the MAC layer via an unique PHY mode identifier for each transport channel. The BCH is transmitted once per cell or per sector, and is either supposed to use or not to use the new pilot patterns. In the latter case a separate "EP pattern identifier" may be broadcast to notify the terminals that the corresponding cell or sector uses PHY bursts applying the new pilot patterns only. In the first case terminals which do not support new pilots schemes will not be able to access the access point.

## V. CONCLUSIONS

From the previously discussed analysis it can be found that the midamble and the scattered pilot based approach, preferably also using DDE techniques significantly improve the PER vs. $E_b/N_0$ performance, representing suitable solutions to support higher terminal velocities for WLANs like HIPERLAN/2 and IEEE802.11a. Among the analysed approaches the DDE assisted midamble-based channel tracking technique supports high terminal speeds (up to 100 km/h), depending on pilot overhead and PHY mode. Scattered pilots using DDE techniques are expected to offer similar results as the DDE assisted midamble-based technique. Finally, a comprehensive concept has been introduced, that enables the MAC layer to access the new pilot schemes by addressing them via PHY mode identifiers.

**ACKNOWLEDGMENT**

This work has been performed in the framework of the IST project IST-2000-28584 MIND, which is partly funded by the European Union. The authors would like to acknowledge the contributions of their colleagues from Siemens AG, British Telecommunications PLC, Agora Systems S.A., Ericsson Radio Systems AB, France Telecom S. A., King's College London, Nokia Corporation, NTT DoCoMo Inc, Sony International (Europe) GmbH, T-Systems Nova GmbH, University of Madrid, and Infineon Technologies AG.

**REFERENCES**

[1] ETS300744 "Digital. Video Broadcasting (DVB): Framing structure, channel coding and modulation for digital terrestrial television," ETSI Sophia Antipolis, France, January 2001
[2] ETSI DTS/BRAN-0023003 "HIPERLAN Type 2 Technical Specification; Physical (PHY) layer," November 1999.

SUMMARY OF THE INVENTION

As can be derived from above stated comparison, for all known approaches the pilot overhead is determined by the Coherence Time and the Coherence Bandwidth of the radio channel, by applying the sampling theorem.

As a conclusion it can be found that the pilot pattern in principal have to fulfil the sampling theorem.

The principal object of the present invention is to minimize the pilot overhead required for channel estimation, particularly to be applied in OFDM or multi-carrier systems.

According to a state-of the-art system design the amount of required pilot overhead is typically determined by the sampling theorem in frequency and time domain, hence resulting in a minimum amount of pilot overhead, where a specific time-variant and possibly also frequency selective radio channel is assumed.

In view of the foregoing object, the present invention is utilizing a pilot scheme, which violates the sampling theorem (even after time/frequency domain interpolation of the pilots) and utilizes "low-delay" Decision Directed reliability information to estimate the channel impulse response/channel transfer function, where the term "low-delay" refers to the requirement that the decision feedback information is delayed at maximum in the order of the Cohernce Time (and/or the time required to sample the Coherence Bandwidth).

By additionally using few scattered pilots in the Decision Directed approach, the "low delay" Decision Directed technique becomes more robust since the detrimental effect of error propagation of a pure Decision Directed scheme is reduced considerably. At the same time, the introduced overhead by pilot symbols is very small because the sampling theorem does not need to be fulfilled as in a conventional pilot-aided system.

BRIEF DESCRIPTION OF FURTHER ASPECTS AND PREFERRED EMBODIMENTS OF THE INVENTION

In general, those skilled in the art will readily recognize that the realization of the underlying invention is not restricted to the above-described examples.

The present invention is based on a minimized pilot pattern scheme, which does not fulfill the sampling theorem (not even after some kind of interpolation of the pilot samples in the time and/or frequency domain), but instead utilizes a low delay Decision Directed feedback approach, which uses some kind of reliability information to extract the required estimates of the channel impulse response/channel transfer function.

This approach is different from known Decision Directed approaches, where for instance the reliability information/decoded bits after the channel decoder are used for re-encoding and hence enable to estimate the transmitted QAM-symbol sequence carrying user data. In these known state-of-the-art approaches the estimated sequence of transmitted QAM symbols is used to estimate the channel transfer function, however being delayed at least by the processing time required for the decoding and the re-encoding operation. It is most important to note that this delay cannot be a low-delay Decision Directed approach because the design criteria for viterbi-based sequence estimation require the encoded data to be spread across a time interval larger than the Coherence Time and/or to be spread across a bandwidth larger than the Coherence Bandwidth to ensure time and/or frequency diversity. If interleaving is used, the delay may further be increased.

Hence it can be said that all known state-of-the-art approaches apply some kind of long-delay Decision Directed feedback approach, where the term "long-delay" refers to the Coherence Time and/or Coherence Bandwidth of the radio channel.

In contrast, the proposed scheme uses feedback (hard/soft) not from the channel decoder but from the demodulator, resulting in low processing delay.

Alternatively it might also be feasible to extract (hard/soft) reliability information from the feed-forward path of some maximum likelihood sequence estimation demodulator and/or channel decoder, as long as the extracted reliability information is fed back to the channel estimation with a "short-delay" with respect to the aforementioned definition (i.e. with respect to Coherence Time and/or Coherence Bandwidth).

Some further embodiments are:

i) The present invention can also be embodied within potential, future "Beyond 3G" and/or "4G system" specifications. First, an optimised pilot pattern for channel estimation purposes has to be introduced into the specification, which violates the sampling theorem in time and/or frequency direction for a certain high speed target scenario. Second, the corresponding high speed target scenario has to be established in the list of mandatory/desired target scenarios, envisaged to be supported by the corresponding Beyond 3G and/or 4G specification, respectively. Typically the high speed target scenario may be described by parameters such as Coherence Time and/or Coherence Bandwidth.

ii) Measurements of hardware equipment can prove, that "short-delay" (hard/soft) decision directed estimates are used to improve the shortcomings (with respect to the channel estimation quality) of an optimised pilot pattern (i. e. with reduced pilot overhead). Assuming that the pilot pattern is fixed (and known) and given, that this pilot pattern does not fulfil the sampling theorem for a specific radio channel, measurements will show an Bit-Error-Rate-Floor over the Signal-to-Noise-Ratio, unless no decision directed estimation approach is utilized to improve channel estimation. The decision directed estimation feed-back approach is proven to be a "low-delay" decision directed feed-back approach, if no Bit-Error-Rate-Floor can be measured even for the case that the Coherence Time $T_c$ (and/or the Coherence Bandwidth) is within the order of magnitude of the 2-3$T_s$ (OFDM-) symbol durations and by knowing, that the processing delay of the channel decoder (potentially also using time/frequency domain interleaving over 10 $T_c$ and/or 10 $\tau_{max}$) is significantly longer than the "short-delay" feedback. Aforementioned processing delay can easily be obtained from the specified time- and/of frequency domain interleaving and from the specified channel decoding scheme, which might apply some kind of maximum likelihood sequence estimation criteria or some iterative (turbo-) decoding scheme.

iii) It shall be mentioned, that state-of-the-art turbo-decoding is considered to also cause a Bit-Error-Rate-Floor, due to the fact that the channel estimation procedure offers poor results (as the pilot pattern violates the sampling theorem). This shortcoming has to be compensated via a "low-delay" decision directed feedback approach, to enable for a more reliable initial (turbo-) decoding step, as well as for the subsequent decoding steps (over the complete received data sequence).

**DETAILED DESCRIPTION OF FURTHER ASPECTS AND PREFERRED EMBODIMENTS OF THE INVENTIONTable of Contents**

**1. Introduction**        **23**

**2. System Parameters**        **24**

**3. Channel Tracking Using Decision Directed Estimation (DDE) 24**

3.1 Principle of DDE        25

3.1.1 Principle of hard DDE        27
3.1.2 Principle of soft DDE        28

3.1.2.1 Choice of a mapping function        29
3.1.2.2 Choice of $\gamma_{max}$        32

3.2 Performance of DDE        36

**EP 1 389 861 A1**

3.2.1 Comparison of soft DDE and pure midamble approach    41

**4. Summary**    43

**5. References**    44

**List of Acronyms and Abbreviations**

| | |
|---|---|
| 16QAM | Quadrature Amplitude Modulation with 16 constellation points |
| 64QAM | Quadrature Amplitude Modulation with 64 constellation points |
| AP | Access Point |
| BPSK | Binary Phase Shift Keying |
| CIR | Carrier to Interference Ratio |
| DDE | Decision Directed Estimation |
| DF | Decision Feedback |
| DFT | Discrete Fourier Transformation |
| DL | Downlink |
| DLC | Data Link Control |
| Downlink | Used when data are transmitted from the AP to the MTs |
| DUC | DLC User Connection |
| ETSI | European Telecommunications Standards Institute |
| FEC | Forward Error Correction |
| FFT | Fast Fourier Transformation |
| H/2 | HIPERLAN/2 |
| HDDE | Hard Decision Directed Estimation |
| HIPERLAN/2 | High PErformance Radio Local Area Network type 2 |
| IEEE | Institute of Electrical and Electronics Engineers |
| IFFT | Inverse Fast Fourier Transform |
| LAN | Local Area Network |
| LCH | Long transport Channel |
| MAC | Medium Access Control |
| MIND | Mobile IP based Network Developments |
| MSE | Mean Square Error |
| MT | Mobile Terminal |
| OFDM | Orthogonal Frequency Division Multiplexing |
| pdf | probability density function |
| PDU | Protocol Data Unit |
| PER | PDU Error Rate |
| PHY | PHYsical |
| QAM | Quadrature Amplitude Modulation |
| QPSK | Quaternary Phase Shift Keying |
| SNR | Signal-to-Noise Ratio |
| SDDE | Soft Decision Directed Estimation |
| UL | Uplink |
| Uplink | Used when data are transmitted from MTs to the AP |

VI. INTRODUCTION

Following the top-down approach of the MIND project, user scenarios are developed which imply a high terminal velocity. On the physical layer, this entails the question of how a robust channel estimation can be accomplished in time-varying radio channels.

In a previous report [1], two techniques for such a channel tracking have been analysed in detail. They were based on a) the use of additional midambles and b) the use of (existing/additional) scattered pilots. It was shown that by applying these concepts, a robust channel estimation could be achieved for most of the given PHY modes and velocities.

For high PHY modes and/or high terminal speeds, the applied techniques did not lead to a satisfactory performance. In these cases, the above-mentioned techniques are obviously not sufficient to keep track of the channel variations.

Consequently, alternative/supplementary techniques are to be conceived.

In this report, the concept of decision directed estimation (DDE) is proposed and analysed, with the aim to provide more frequent channel updates during the channel tracking procedure. This concept is combined with the midamble approach in such a way that the tracking between two midambles is performed with a DDE technique. The use of hard as well as soft feedback is investigated.

The structure of the report is as follows: In section VII, the main simulation parameters are briefly summarized. Section VIII is devoted to the decision directed channel estimation, including both the general concepts and the detailed quantitative results. It is shown that the combination of midambles and DDE is advantageous for medium/high PHY modes (QPSK/16-QAM) and high velocities (100 km/h) to obtain a better performance than applying only the midamble approach. Alternatively, the distance between midambles can be increased by the additional use of DDE, yielding a lower overhead for pilot symbols.

Finally, a summary is given in section IX.

VII. SYSTEM PARAMETERS

For the quantitative analysis, certain parameters and assumptions need to be fixed. The main parameters are listed in Table 1.

Table 1:

| Simulation parameters used throughout the simulations | |
|---|---|
| Channel model | ETSI channel model C (large open space) |
| OFDM parameters | According to HIPERLAN/2 PHY specification |
| Analysed PHY modes | BPSK, $R = \frac{1}{2}$ QPSK, $R = \frac{3}{4}$ 16-QAM, $R = \frac{3}{4}$ |
| Terminal velocity | $v$ = 50 km/h and 100 km/h |
| Interpolation method in frequency direction | Wiener filtering (5 coefficients) |
| DDE methods | Hard DDE with midambles (initialisation period p) Soft DDE with midambles (initialisation period p) |
| Update scheme for DDE | Symbol-wise update |
| Reference chain for comparison | Ideal channel estimation |

VIII. CHANNEL TRACKING USING DECISION DIRECTED ESTIMATION (DDE)

This section covers the concepts and investigations concerning a decision directed channel estimation (DDE), combined with a midamble approach. First, the principle of DDE is described, where the cases of hard and soft feedback are distinguished. The performance of both methods is then analysed and compared quantitatively with the help of simulations.

*A. Principle of DDE*

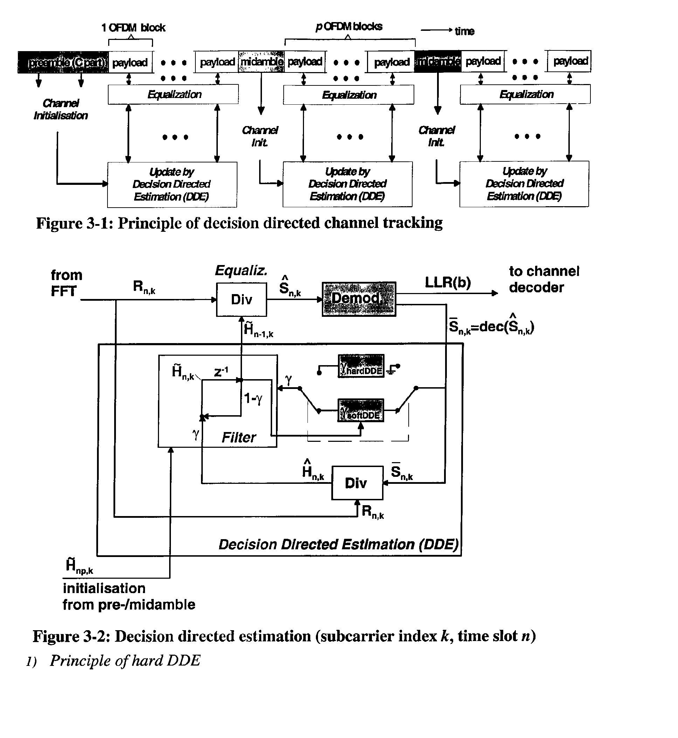

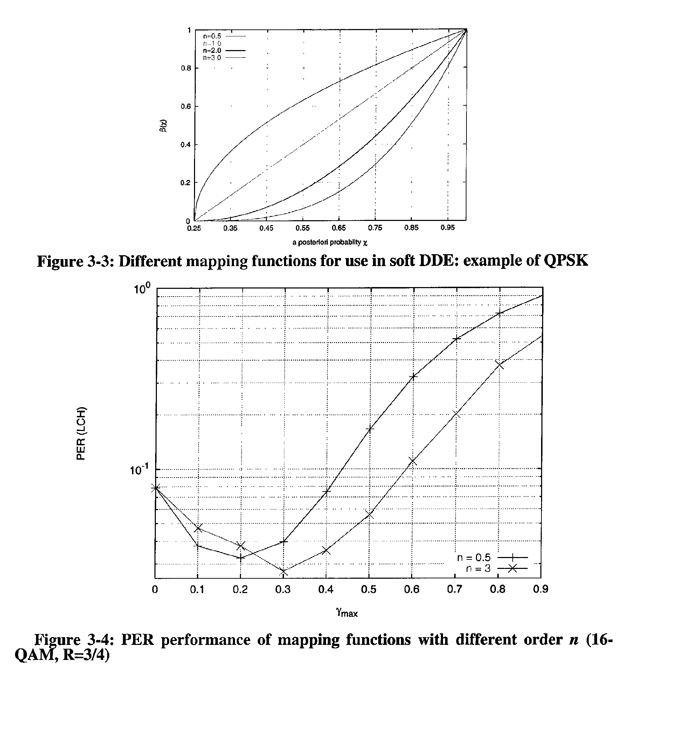

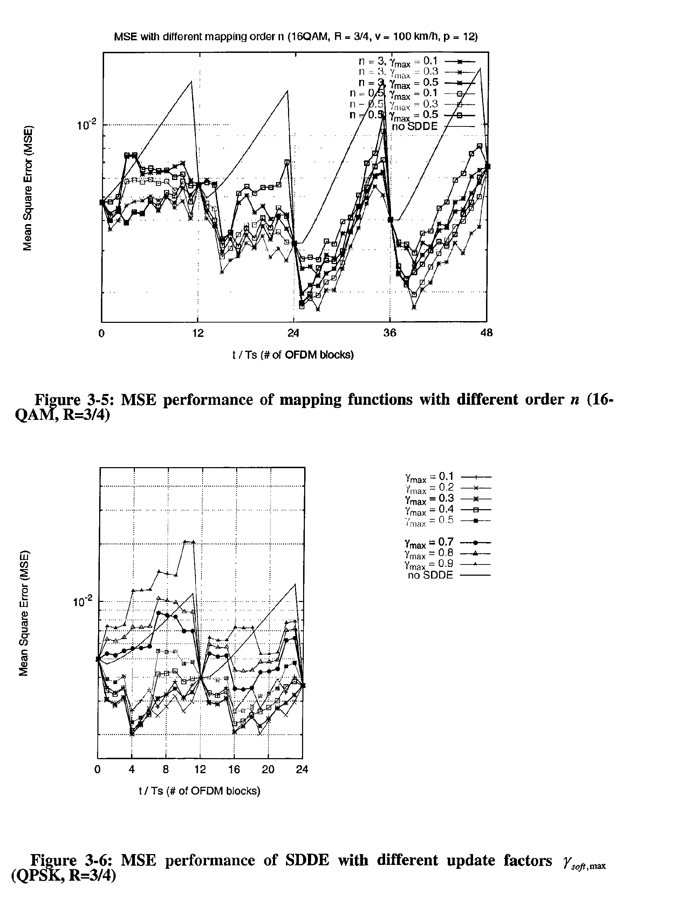

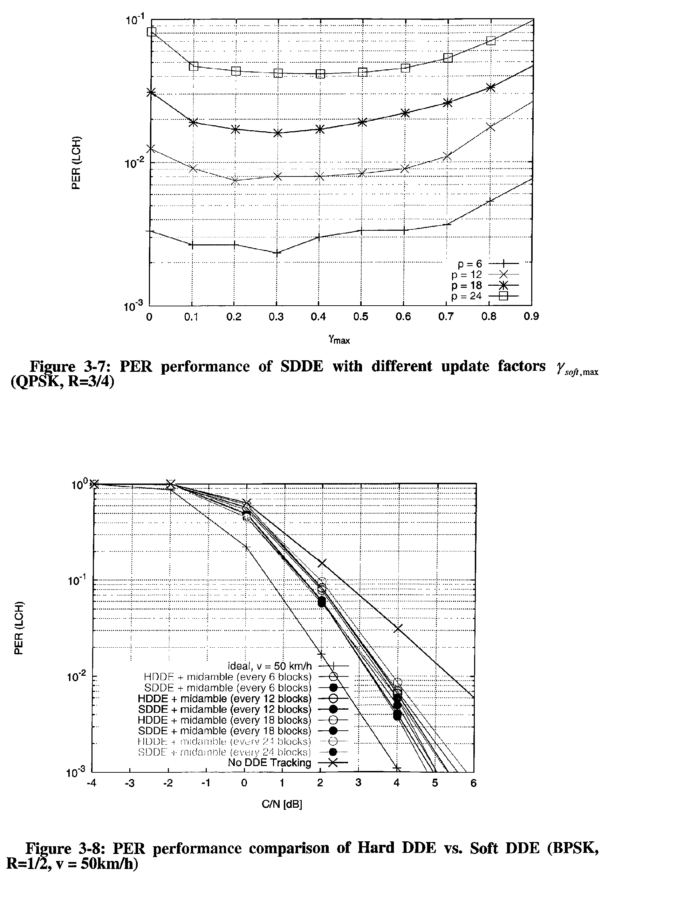

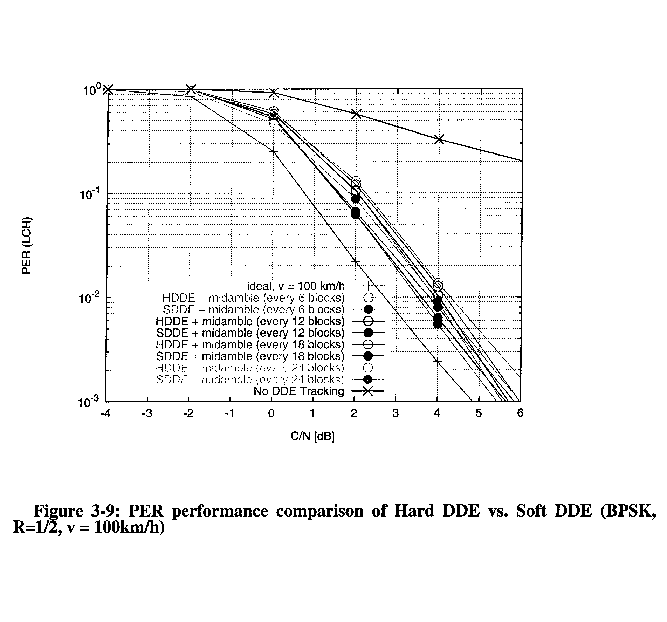

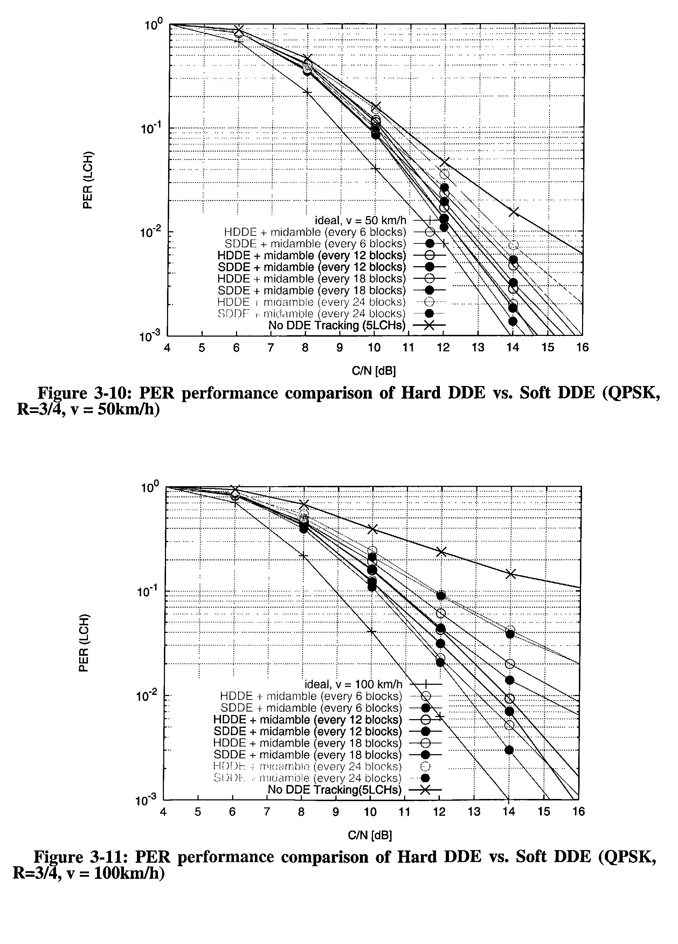

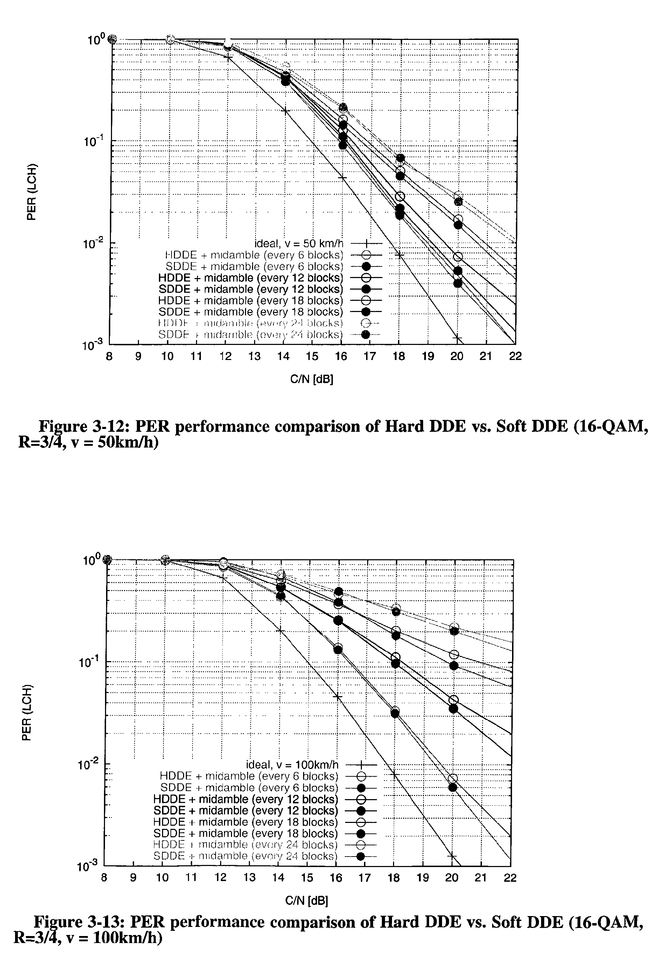

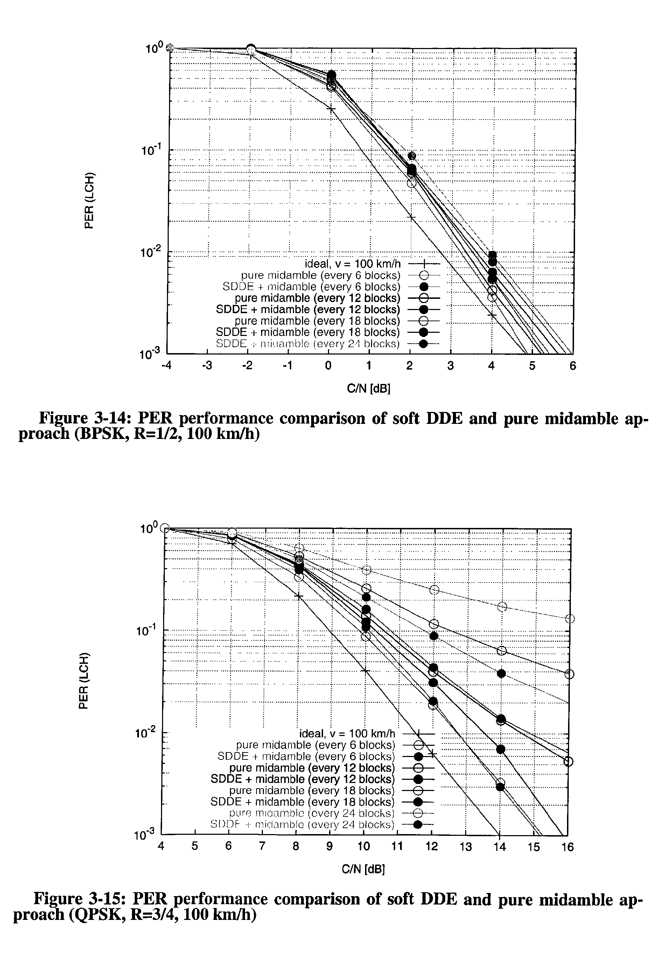

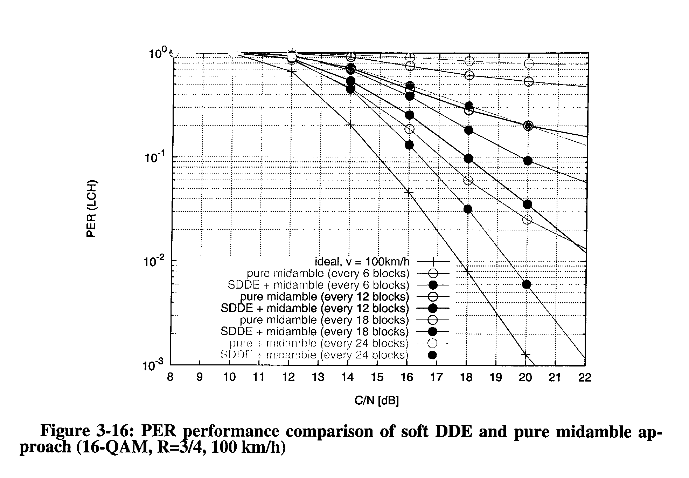

In Figure 3-1, the basic concept of a decision directed channel estimation (DDE) is depicted.

**Figure 3-1: Principle of decision directed channel tracking**

As shown in Figure 3-1, the same burst components are used as in the *midamble-based* channel tracking [1]. Here both preamble and inserted midamble are used as reference symbols to provide reliable channel estimates for initialisation at the very beginning of each initialisation period with p OFDM blocks. A midamble can either be a long (8 μs) or a short one (4 μs, as depicted in Figure 3-1) .In the simulations, a long midamble (8 μs) has been applied, which has the same structure as that of the preamble. The midamble has a length of two payload OFDM blocks in order to reduce the influence of the noise power compared to the short midamble, thus providing a more reliable channel initialisation. In order to limit error propagation stemming from wrong fed-back decisions in the DDE, a recursive update filter of first order is only used inside one initialisation period, while a completely new channel initialisation is started for the next DDE channel tracking period, i.e. after each midamble.

Note that in the DDE technique, one needs to distinguish between the *initialisation* period given by the midamble distance *p* (i.e. for initialising the feedback filter) and the *update* period of the channel estimates in the DDE which is always one (i.e. a new estimate is calculated for each OFDM block).

As depicted in Figure 3-2, the DDE procedure for each of the *p* OFDM blocks works as follows (here n denotes the time slot, *k* denotes the index of the subcarrier inside an OFDM block):

- Take the channel states $\tilde{H}_{n-1,k}$ of the preceding OFDM block to initialise the DDE for the current OFDM block

- Equalize the received symbol $R_{n,k}$:

$$\hat{S}_{n,k} = \frac{R_{n,k}}{\widetilde{H}_{n-1,k}}$$

$$(3.1.1)$$

- Select the nearest symbol $\bar{S}_{n,k}$ as the demodulated symbol for $\hat{S}_{n,k}$:

$$\bar{S}_{n,k} = dec(\hat{S}_{n,k})$$

$$(3.1.2)$$

- Calculate a channel estimate $\hat{H}_{n,k}$ as:

$$\hat{H}_{n,k} = \frac{R_{n,k}}{\bar{S}_{n,k}}$$

$$(3.1.3)$$

- Determine an update factor γ:

$$\gamma = \begin{cases} \gamma_{hardDDE} \\ \gamma_{softDDE} = \Gamma(\bar{S}_{n,k}) \end{cases}$$

$$(3.1.4)$$

- Apply a recursive filter for updating the channel estimate:

$$\tilde{H}_{n,k} = \gamma \cdot \hat{H}_{n,k} + (1-\gamma) \cdot \tilde{H}_{n-1,k} \quad (3.1.5)$$

Considering the computation complexity and introduced delay, a loop on symbol level before the channel decoding unit is applied. Consequently, an error correction is not included in the feedback loop, keeping the processing delay low (one OFDM block).

The update factor $\gamma$ ($0 \leq \gamma \leq 1$) can be determined by taking into account the reliability of the estimate $\hat{H}_{n,k}$ or by setting it to a fixed value. Based on how to choose suitable update factors $\gamma$, two different DDE concepts are proposed: soft DDE and hard DDE. Details will be addressed in the next sections.

**Figure 3-2: Decision directed estimation (subcarrier index $k$, time slot $n$)**

*1) Principle of hard DDE*

In the hard DDE case, the update factor $\gamma$ is set as a constant value during the analysis. The optimal value of $\gamma$ is investigated by simulation. Similarly as the update factor $\alpha$ in [1], the determining elements for optimising $\gamma$ have the same influence as discussed there. The only difference is that the update period is $p$ for the pure *midamble based* case but here it is one for the symbol-wise update scheme.

Similar to the analysis of the update factor in [1], the value of the update factor $\gamma_{hardDDE}$ should be adapted to the initialisation period p and the terminal velocity. In hard DDE, fixed values for $\gamma_{hardDDE}$ are assigned, which are based on the simulation results, to scale the DDE feedback estimates. The specific parameter values which have proven to be suitable are shown in Table 2. There are two main considerations in the choice of $\gamma_{hardDDE}$:

- The longer the initialisation period $p$, the larger $\gamma_{hardDDE}$ should be chosen.
- The higher the terminal speed, the larger $\gamma_{hardDDE}$ should be chosen.

In general, it can be deducted from the results that the choice of 0.10 as an update factor is suitable for most of the considered modulation schemes/velocities, only in the "extreme" cases of low or high PHY mode/speed/initialisation period, the values should be changed to 0.05 or 0.20, respectively.

Compared to the update factors used in [1] for the midambles, the values of $\gamma_{hardDDE}$ in Table 2 are obviously rather small. This is due to the fact that the *update* period for channel estimation in DDE is one (symbol-by-symbol), whereas it is larger (equal top) for the midamble case.

Table 2:

| γ*hardDDE* | BPSK | | 4QAM | | 16QAM | |
|---|---|---|---|---|---|---|
| Init. period p | v= 50km/h | v= 100km/h | v= 50km/h | v= 100km/h | v= 50km/h | v= 100km/h |
| 6 | 0.05 | 0.10 | 0.10 | 0.10 | 0.10 | 0.10 |
| 12 | 0.05 | 0.10 | 0.10 | 0.10 | 0.10 | 0.10 |
| 18 | 0.10 | 0.10 | 0.10 | 0.10 | 0.10 | 0.20 |
| 24 | 0.10 | 0.10 | 0.10 | 0.10 | 0.10 | 0.20 |

Table title: **Different initialisation update factors γ$_{hardDDE}$ for HDDE simulations**

Since $\gamma$ is chosen as a fixed value, a hard DDE technique cannot adapt to the different reliabilities of the symbol decisions. Therefore a modified concept of a *soft* DDE is proposed to take this effect into account. It is discussed in the next section.

*2) Principle of soft DDE*

For soft DDE, first the a posteriori probability $\chi$ of the decision/demodulation step is calculated, then the final update factor $\gamma$ is determined as a scaled variable according to its estimation reliability $\beta(\chi)(0\leq\beta\leq1)$ from symbol to symbol. In hard DDE, $\beta$ is simply set to 1.0. In other words, it holds that

$$\gamma_{softDDE} = \gamma_{max} \cdot \beta$$
$$\gamma_{hardDDE} = \gamma_{hardDDE} \cdot \beta|_{\beta=1.0} \qquad (3.1.6)$$

where $\gamma_{max}$ denotes the maximal feedback factor of the recursive filter.

*a) Choice of a mapping function*

In the following discussion on how to develop $\beta$, the subscripts *m* and *i* are omitted for brevity. It is assumed that the random signal *R* observed by the symbol demodulator is corrupted by additive white Gaussian noise (AWGN) $N \Leftrightarrow G(0, \sigma^2)$, where

$$R = S \cdot H + N \qquad (3.1.7)$$

the conditional pdf of *R* given *S* is

$$p(R|S) = \frac{1}{\sqrt{2\pi}\sigma} \exp(- \frac{1}{\sigma^2}|R - S \cdot H|^2) \qquad (318)$$

The values *S* are taken from a finite-alphabet set *s* ($S_k \in s, k =1,2,..K$), e.g. QAM modulation. Using

$$p(R) = \sum_k p(R,S_k) = \sum_k p(R|S_k) \cdot P(S_k) \qquad (3.1.9)$$

the a posteriori probability of the estimated symbol $\bar{S}$ is given as:

$$P(\bar{S} \mid R) = \frac{p(R \mid \bar{S}) \cdot P(\bar{S})}{p(R)} = \frac{p(R \mid \bar{S}) \cdot P(\bar{S})}{\sum_k p(R \mid S_k) \cdot P(S_k)} \qquad (3.1.10)$$

In the demodulator, the symbol $\bar{S}$ which has the nearest distance to the equalized symbol $\hat{S}$ will be chosen as the demodulated symbol. On the assumption that all the symbols $S_k$ are transmitted with equal probability, it follows from Eq (3.1.8) and Eq (3.1.10) that

$$P(\bar{S} \mid R) = \frac{p(R \mid \bar{S})}{\sum_k p(R \mid S_k)} = \frac{\exp(-\frac{|H|^2}{2\sigma^2} \cdot |\hat{S} - \bar{S}|^2)}{\sum_k \exp(-\frac{|H|^2}{2\sigma^2} \cdot |\hat{S} - S_k|^2)} \qquad (3.1.11)$$

Eq (3.1.11) shows that $P(\bar{S} \mid R)$ depends on the distances (between $\hat{S}$ and $S_k$), the fading channel states and the noise. Also, it shows that the demodulated symbol has the maximal a posteriori probability in the set $s$. In the following, $P(\bar{S} \mid R)$ is denoted as $\chi$. Obviously,

$$\frac{1}{K} \leq \chi \leq 1 \qquad (3.1.12)$$

**Figure 3-3: Different mapping functions for use in soft DDE: example of QPSK**

For a given value of $\chi$, a suitable mapping function $\beta(\chi)$ remains to be found to adjust the feedback *coefficient* $\gamma_{softDDE}(\chi)$. In general it can be stated that $\gamma_{softDDE}(\chi)$ should be increased with increasing $\chi$. Here, different mapping functions of the form

$$\beta(\chi) = \frac{(\chi - \frac{1}{K})^n}{(1 - \frac{1}{K})^n} \Rightarrow \gamma_{softDDE}(\chi) = \gamma_{max} \cdot \frac{(\chi - \frac{1}{K})^n}{(1 - \frac{1}{K})^n}, \quad \frac{1}{K} \leq \chi \leq 1 \qquad (3.1.13)$$

are analysed. The idea of selecting different exponents $n$ is to project the posteriori a probability $\chi$ as reliability information in different ways. Two further considerations seem to be important:

- The number $K$ of possible elements in the modulation schemes influences the choice of a suitable $n$. $K$ determines

the range of $\chi$ and the scaling of the mapping function.
- The greater the a posteriori probability $\chi$ is, the larger the DDE feedback $\gamma_{softDDE}(\chi)$ will be. However, it is probably not wise to use only a linear mapping ($n$ = 1) function, but instead some other (nonlinear) relationship.

Figure 3-3 shows the mapping function $\beta(\chi)$ with different numerical values of $n$ ($n$ = 0.5 / 1 / 2 /3) for the example of a QPSK.
As depicted in the following Figures for the example of a 16-QAM, R=3/4 (Figure 3-4 and Figure 3-5), based on the criterion of the estimated Mean Square Error (MSE, of the estimates for the input of the equalizer) and the Packet Error Rate (PER), the performance is compared in detail for different values of $n$ and $\gamma_{max}$ with three different PHY modes. As a conclusion, Table 3 gives suitable exponents for the mapping functions used in the simulations.

**Figure 3-4: PER performance of mapping functions with different order $n$ (16-QAM, R=3/4)**

MSE with different mapping order n (16QAM, R = 3/4, v = 100 km/h, p = 12)

**Figure 3-5: MSE performance of mapping functions with different order *n* (16-QAM, R=3/4)**

Table 3:

| Chosen mapping functions for soft DDE | | | |
|---|---|---|---|
| modulation scheme | BPSK | 4QAM | 16QAM |
| suitable exponents *n* for the mapping function | 0.5 | 2 or 3 | 2 or 3 |

*b) Choice of $\gamma_{max}$*

In hard DDE, $\gamma_{hardDDE}$ was chosen as a constant throughout the whole simulation. In this case, $\gamma_{hardDDE}$ is rather small to track the changes of the channel states with a symbol-wise update strategy. Obviously the fixed $\gamma_{hardDDE}$ cannot be adapted to the different reliabilities of fed-back symbols. In soft DDE, $\gamma_{softDDE}$ is adapted symbol by symbol. Based on the estimation reliability, the feed-back factor $\gamma_{softDDE}$ is set as a variable and can have a large dynamic range ($0 \leq \gamma_{softDDE} \leq \gamma_{max}$).

One SDDE example is taken to investigate the characteristics of $\gamma_{softDDE}$. The dynamic range of $\gamma_{softDDE}$, i.e. $\gamma_{max}$, is considered. As shown in Figure 3-6 and Figure 3-7, it should be noted that:

- $\gamma_{max}$, the dynamic range of $\gamma_{softDDE}$ can be very large (e.g. $\gamma_{max}$ can be assigned up to 0.60 and almost achieve the same estimation quality with that of no SDDE , see Figure 3-6).
- The initialisation period p influences the optimal value of $\gamma_{max}$. Therefore, the optimal parameter of $\gamma_{max}$ should be optimised depending on *p*. Similarly as in Hard DDE, the longer the initialisation update period *p* , the greater $\gamma_{max}$ is.

Table 4 shows different suitable feed-back factors $\gamma_{max}$, based on the simulation results, for SDDE simulations with specific modulation schemes and velocities.

**Figure 3-6: MSE performance of SDDE with different update factors** $\gamma_{soft,max}$ **(QPSK, R=3/4)**

**Figure 3-7: PER performance of SDDE with different update factors** $\gamma_{soft,max}$ **(QPSK, R=3/4)**

Table 4:

| Different maximal update factors $\gamma_{max}$ for soft DDE simulations | | | | | | |
|---|---|---|---|---|---|---|
| $\gamma_{max}$ | BPSK | | QPSK | | 16QAM | |
| Init. Period $p$ | $v$= 50km/h | $v$= 100km/ h | $v$= 50km/h | $v$= 100km/ h | $v$= 50km/h | $v$= 100km/ h |
| 6 | 0.05 | 0.10 | 0.10 - 0.20 | 0.20 | 0.20 - 0.30 | 0.20 - 0.30 |
| 12 | 0.05 - 0.10 | 0.10 | 0.10 - 0.20 | 0.20 - 0.30 | 0.20 - 0.30 | 0.30 |
| 18 | 0.10 | 0.10 | 0.20 - 0.30 | 0.30 | 0.20 - 0.30 | 0.30 |
| 24 | 0.10 | 0.20 - 0.30 | 0.20 - 0.30 | 0.30 - 0.40 | 0.30 | 0.30 - 0.40 |

As becomes clear from the comparison of Table 2 and Table 4, the selected values for soft DDE are higher than those for hard DDE. This can be explained by Eq. (3.1.6): The values given in Table 2 are directly used for $\gamma$, whereas the figures in Table 4 constitute *maximal* values, i.e. the actually applied $\gamma$ varies between zero and $\gamma_{max}$ and can temporarily take on considerably smaller values, depending on the reliability of the fed-back symbol.

*B. Performance of DDE*

In this section, he performance results of both hard DDE and soft DDE are presented in terms of PER vs. the C/N. The following six Figures compare the results for all three considered PHY modes (BPSK, R=1/2, QPSK, R=3/4, 16-QAM, R=3/4) and two velocities (v = 50 km/h and 100 km/h).

**Figure 3-8: PER performance comparison of Hard DDE vs. Soft DDE (BPSK, R=1/2, v = 50km/h)**

**Figure 3-9: PER performance comparison of Hard DDE vs. Soft DDE (BPSK, R=1/2, v = 100km/h)**

**Figure 3-10: PER performance comparison of Hard DDE vs. Soft DDE (QPSK, R=3/4, v = 50km/h)**

**Figure 3-11: PER performance comparison of Hard DDE vs. Soft DDE (QPSK, R=3/4, v = 100km/h)**

**Figure 3-12: PER performance comparison of Hard DDE vs. Soft DDE (16-QAM, R=3/4, v = 50km/h)**

**Figure 3-13: PER performance comparison of Hard DDE vs. Soft DDE (16-QAM, R=3/4, v = 100km/h)**

When comparing hard and soft DDE curves, it can be observed that there is a performance gain of soft over hard DDE for all PHY modes and velocities. This gain amounts to approx. 0.2 - 0.5 dB in all cases and is smaller than originally expected.

There are several possible explanations for this observation. First, the fact that non-ideal channel knowledge is used for calculating the (soft) update factors, especially on subcarriers with low SNRs, could have a detrimental effect which outweighs the advantage of a soft feedback. This could possibly be verified by alternatively assuming perfect channel knowledge when calculating the update factor and comparing the results. This explanation is supported by the fact that the gap between soft and hard DDE becomes larger with increasing SNR, where the update factors can be estimated more precisely due to a more reliable channel information.

Secondly, the demodulator feeds back only one symbol (the nearest one to the equalized symbol) as the one which is assumed to be transmitted. Decision errors which occur, especially for higher order modulation schemes, will lead to erroneous channel updates. A possible improvement could consist of feeding back not only the nearest, but also the second, third,... nearest symbol to offer alternatives for a channel update. In this case, some decision rules, which of the alternatives is to be used, must be defined.

Finally, there might be other alternatives to calculate the update factor $\gamma$ in a more appropriate way.

*1) Comparison of soft DDE and pure midamble approach*

In Figure 3-14, Figure 3-15, and Figure 3-16, a comparison between the results for soft DDE and the pure midamble approach is drawn (all three considered PHY modes), where the terminal speed is assumed as v = 100 km/h.

To summarize the results given above, it can be noted that a performance improvement when applying SDDE is observed for the PHY modes of QPSK, R=3/4 (update/initialisation period of 12 and above) and 16-QAM, R=3/4 (all update periods). This means that the DDE technique can be applied as an option for the QPSK, R=3/4 mode, with the advantage that the distance between midambles can be increased from 6 to 12, while still a satisfactory performance is obtained.

For the 16-QAM, R=3/4 mode, the use of SDDE is mandatory and facilitates a good channel estimation (initialisation period of 6), which cannot be achieved by a pure midamble technique.

**Figure 3-14: PER performance comparison of soft DDE and pure midamble approach (BPSK, R=1/2, 100 km/h)**

**Figure 3-15: PER performance comparison of soft DDE and pure midamble approach (QPSK, R=3/4, 100 km/h)**

**Figure 3-16: PER performance comparison of soft DDE and pure midamble approach (16-QAM, R=3/4, 100 km/h)**

## IX. SUMMARY

In this report, investigations were presented dealing with a decision directed channel estimation (DDE) in a HIPERLAN/2 / IEEE802.11a system, combined with a midamble approach. The use of hard as well as of soft feedback was considered. A detailed analysis concerning the choice of different feedback parameters was performed in order to find a suitable strategy to pass on hard/soft information from the demodulator to the channel estimator. Among the different possible strategies of a decision directed channel estimation, the analysed technique has the advantage that only a very small processing delay (one OFDM block) is introduced since the channel update is performed on a symbol-by-symbol basis. Furthermore, the computation complexity is small compared to alternative feed-back loops, e.g. which include channel decoding/re-encoding.

As one important result, it should be emphasized that the use of DDE is in some cases (PHY modes/vehicle speeds) advantageous or even necessary to improve the channel estimation based on a midamble approach. DDE can "bridge the gap" between subsequent estimates coming from a midamble. Alternatively, if the same performance of channel estimation should be maintained compared to the midamble concepts, the distance between midambles can be increased, leading to a reduced overhead for pilot symbols. Comparing hard and soft feedback, a soft feedback gives an advantage in the order of approx. 0.5 dB (PER of $10^{-2}$).

Based on the results of the previous report, the table of recommended tracking techniques given in [1] (Table 8 in section 6) can be extended because the technique of DDE together with midambles can/must be used for QPSK, R=3/4 / 16-QAM, R=3/4 (v = 100 km/h). For the other cases, the estimation procedures analysed in [1] give already a satisfactory performance.

Table 5:

| Recommended channel tracking techniques for different PHY modes and velocities, based on [1] and DDE results. | | |
|---|---|---|
| | *v* = 50 km/h | *v* = 100 km/h |
| BPSK, R = ½ <br> 4 LCHs per burst | Scattered pilots Midambles | Midambles Scattered pilots |
| QPSK, R = ¾ | Midambles Scattered pilots | Midambles Midambles + DDE |

Table 5: (continued)

| Recommended channel tracking techniques for different PHY modes and velocities, based on [1] and DDE results. | | |
|---|---|---|
| | *v* = 50 km/h | *v* = 100 km/h |
| 5 LCHs per burst | | |
| 16-QAM, R = ¾ <br> 5 LCHs per burst | Scattered pilots Midambles | Midambles + DDE |

X. REFERENCES

[1] Rainer Grunheid: *Analysis of Channel Estimation for Higher Velocities in HIPERLAN/2,* IST-2000-28584/SM/WP3/308/al, April 2002

[2] ETSI DTS/BRAN-0023003, *HIPERLAN Type 2 Technical Specification; Physical (PHY) layer,* November 1999

**Claims**

1. Transmitter for supporting, in particular wireless, communication over a communication channel by means of pilot-assisted systems, in particular a MC-CDMA and/or OFDM system, comprising means for transmitting a pilot pattern, particularly for channel estimation and/or channel equalisation, over a communication channel, whereby the pilot pattern is designed in such a manner, that it at least partially disregards the sampling theorem.

2. Transmitter according to claim 1, wherein said sampling theorem is disregarded in the sense that perfect estimation of the communication channel is systematically not possible even for the ideal case when the receive signal is not corrupted by any additive noise and/or interference.

3. Transmitter according to claim 1 or 2, wherein said transmitting means are arranged in such a manner, that said sampling theorem applied to the transmitted pilot pattern may at least be partially disregarded in time, frequency and/or space domain.

4. Transmitter according to claim 3, wherein said transmitting means are arranged in such a manner, that said sampling theorem applied to the transmitted pilot pattern at least is partially disregarded in space domain utilizing multiple transmit antennas.

5. Receiver for supporting, in particular wireless, communication over a communication channel by means of pilot-assisted systems, in particular a MC-CDMA and/or OFDM system, comprising means for receiving a pilot pattern, particularly for channel estimation and/or channel equalisation, whereby said pilot pattern is designed in such a manner, that it at least partially disregards the sampling theorem and comprising means for complementing the estimation properties of said pilot pattern by a Decision-Directed-Estimation approach.

6. Receiver according to claim 5, wherein said sampling theorem is disregarded in the sense that perfect estimation of the communication channel is systematically not possible even for the ideal case when the receive signal is not corrupted by any additive noise and/or interference.

7. Receiver according to claim 5 or 6, wherein said pilot pattern may at least be partially disregarded in time, frequency and/or space domain with respect to the sampling theorem and wherein said complementing means in particular enable for reliable channel estimation and/or equalization.

8. Receiver according to claim 7, wherein said receiving means are arranged in such a manner, that said sampling theorem applied to the transmitted pilot pattern at least is partially disregarded in space domain utilizing multiple receive antennas.

9. Receiver according to one of claims 5 to 8, wherein said Decision-Directed-Estimation approach is either based on soft/hard- demodulation and/or based on soft/hard-decoding.

10. Receiver according to one of claim 5 to 9, wherein said Decision-Directed-Estimation approach is fed back, particularly in iterative steps, to improve the channel estimate, the demodulation and/or the decoding quality.

11. Receiver according to one of the claims 5 to 10, wherein said Decision-Directed-Estimation is based on soft-decisions values extracted after the demodulator and previous to the decoder, such that the processing delay is minimized to achieve more accurate estimates, particularly in the presence of a time-variant, particularly mobile, communication channel.

12. Method for supporting, in particular wireless, communication over a communication channel by means of pilot-assisted systems, in particular a MC-CDMA and/or OFDM sys-tem, comprising the steps of:

- transmitting a pilot pattern by means of a transmitter associated with a mobile transmission system utilising said pilot-assisted system, in particular multi-carrier and/or OFDM system, especially for channel estimation and/or channel equalisation, whereby said pilot pattern is designed in such a manner, that it at least partially disregards the sampling theorem,
- receiving said pilot pattern and complementing the channel estimation and/or equalization properties of said pilot pattern by a Decision-Directed-Estimation approach by means of a receiver associated with said mobile transmission system utilising said pilot-assisted sys-tem, particularly a wireless multi-carrier and/or OFDM system.

13. Method according to claim 12, wherein said Decision-Directed-Estimation approach is either based on soft/hard-demodulation and/or based on soft/hard-decoding.

14. Method according to claim 12 or 13, wherein said Decision-Directed-Estimation approach is fed back, particularly in iterative steps, to improve the channel estimate, the demodulation and/or the decoding quality.

15. Method according to one of claims 12 to 14, wherein said sampling theorem applied to the transmitted pilot pattern may at least be partially disregarded in time, frequency and/or space domain.

16. Method according to claim 15, wherein said sampling theorem applied to the transmitted pilot pattern at least is partially disregarded in space domain utilizing multiple transmit and/or multiple receive antennas.

17. Method according to one of the claims 12 to 16, wherein said Decision-Directed-Estimation approach is based on soft-decisions values extracted after the demodulation procedure and previous to the decoding procedure, such that the processing delay is minimized to achieve more accurate estimates, particularly in the presence of a time-variant, particularly mobile, communication channel.

Figure 1. Enhanced pilot pattern ("**pattern 1**") making use of a reorganisation of the existing **4 pilot carriers** per OFDM block

Figure 2. Enhanced pilot pattern ("**pattern 2**") making use of a reorganisation of the existing **4 pilot carriers** per OFDM block

Figure 3. Enhanced pilot pattern ("**pattern 3**") making use of **16 pilot carriers** per OFDM block

Figure 4. Principle of midamble-based channel tracking

Figure 5. Principle of decision-directed channel estimation combined with the midamble approach

Figure 6. Performance of channel tracking methods: **QPSK, R=3/4, 50 km/h**

Figure 7. Performance of channel tracking methods: **16-QAM, R=3/4,      50 km/h**

Figure 8. Performance of channel tracking methods: **QPSK, R=3/4, 100 km/h**

Figure 9. Performance of channel tracking methods: **16-QAM, R=3/4,        100 km/h**

**Figure 3-1: Principle of decision directed channel tracking**

**Figure 3-2: Decision directed estimation (subcarrier index $k$, time slot $n$)**

*1) Principle of hard DDE*

**Figure 3-3: Different mapping functions for use in soft DDE: example of QPSK**

**Figure 3-4: PER performance of mapping functions with different order $n$ (16-QAM, R=3/4)**

**Figure 3-5: MSE performance of mapping functions with different order $n$ (16-QAM, R=3/4)**

**Figure 3-6: MSE performance of SDDE with different update factors $\gamma_{soft,max}$ (QPSK, R=3/4)**

**Figure 3-7: PER performance of SDDE with different update factors** $\gamma_{soft,max}$ **(QPSK, R=3/4)**

**Figure 3-8: PER performance comparison of Hard DDE vs. Soft DDE (BPSK, R=1/2, v = 50km/h)**

**Figure 3-9: PER performance comparison of Hard DDE vs. Soft DDE (BPSK, R=1/2, v = 100km/h)**

**Figure 3-10: PER performance comparison of Hard DDE vs. Soft DDE (QPSK, R=3/4, v = 50km/h)**

**Figure 3-11: PER performance comparison of Hard DDE vs. Soft DDE (QPSK, R=3/4, v = 100km/h)**

**Figure 3-12: PER performance comparison of Hard DDE vs. Soft DDE (16-QAM, R=3/4, v = 50km/h)**

**Figure 3-13: PER performance comparison of Hard DDE vs. Soft DDE (16-QAM, R=3/4, v = 100km/h)**

**Figure 3-14: PER performance comparison of soft DDE and pure midamble approach (BPSK, R=1/2, 100 km/h)**

**Figure 3-15: PER performance comparison of soft DDE and pure midamble approach (QPSK, R=3/4, 100 km/h)**

**Figure 3-16: PER performance comparison of soft DDE and pure midamble approach (16-QAM, R=3/4, 100 km/h)**

**European Patent Office**

**EUROPEAN SEARCH REPORT**

Application Number

EP 02 01 8018

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | LUISE ET AL: "Carrier frequency acquisition and tracking for OFDM systems" IEEE TRANSACTIONS ON COMMUNICATIONS, IEEE INC. NEW YORK, US, vol. 44, no. 11, 1 November 1996 (1996-11-01), pages 1590-1598, XP002081217 ISSN: 0090-6778 * abstract * * page 1596, Conclusion, two last sentences * | 1-17 | H04L27/26 H04L25/02 H04L5/02 |
| X | US 6 141 393 A (BAUM KEVIN L ET AL) 31 October 2000 (2000-10-31) * column 4, last line - column 5, line 5 * * column 5, line 16 - line 20 * * column 6, line 21 - line 25 * * column 7, line 12 - line 15 * | 1-17 | |
| X | MULLER-WEINFURTNER S H: "Frequency-domain frame synchronization for optimum frequency-differential demodulation of ofdm" IEEE GLOBAL TELECOMMUNICATIONS CONFERENCE (GLOBECOM '99), RIO, BRAZIL, December 1999 (1999-12), pages 857-862, XP010373667 * page 859, Hybrid solution, paragraph 1 * | 1-17 | **TECHNICAL FIELDS SEARCHED** (Int.Cl.7) H04L |

The present search report has been drawn up for all claims

| Place of search | Date of completion of the search | Examiner |
|---|---|---|
| MUNICH | 28 October 2002 | Agudo Cortada, E |

EPO FORM 1503 03.82 (P04C01)

**EP 1 389 861 A1**

## ANNEX TO THE EUROPEAN SEARCH REPORT
## ON EUROPEAN PATENT APPLICATION NO.

EP 02 01 8018

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2002

| Patent document cited in search report | | Publication date | Patent family member(s) | | Publication date |
|---|---|---|---|---|---|
| US 6141393 | A | 31-10-2000 | AU | 3245700 A | 21-09-2000 |
| | | | WO | 0052872 A1 | 08-09-2000 |

EPO FORM P0459

For more details about this annex : see Official Journal of the European Patent Office, No. 12/82